Europäisches Patentamt

European Patent Office

Office européen des brevets

(19)

(11) **EP 1 014 118 A1**

(12) **EUROPEAN PATENT APPLICATION**

(43) Date of publication:
**28.06.2000 Bulletin 2000/26**

(51) Int Cl.$^7$: **G02B 5/28**, C03C 17/34, C03C 17/36

(21) Application number: **98124360.3**

(22) Date of filing: **22.12.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant: **GLAVERBEL**
**1170 Bruxelles (BE)**

(72) Inventors:
• **Hevesi, Kadosa**
**5100 Jambes (BE)**

• **Decroupet, Daniel**
**5070 Fosses-La-Ville (BE)**

(74) Representative: **Vandenberghen, Lucienne**
**Glaverbel - Center R. & D.,**
**Department Industrial Property,**
**Rue de l'Aurore, 2**
**6040 Jumet (BE)**

(54) **Dichromatic mirror**

(57)   A dichromatic mirror and a method for manufacturing thereof, particularly suitable for use in a road vehicle rear-view mirror incorporating a warning light, the mirror comprising a vitreous substrate and a coating on the substrate, the said coating comprising a semiconductor layer having a refractive index above 3.0 adjacent to a dielectric layer of a material having a refractive index between 1.6 and 2.8, the mirror having a colour in reflection on the coated face of the substrate corresponding in the Lab system to a "b" value above -5. The invention also relates to a dichromatic mirror comprising a semiconductor layer having a refractive index above 3.0 adjacent to a metal layer.

EP 1 014 118 A1

**Description**

This invention relates to a dichromatic mirror (otherwise known as an optical filter) in the form of a coated substrate. The term "dichromatic mirror" is used herein for a mirror which has a reflectance over a first range of wavelengths of the luminous spectrum higher than over the rest of the same spectrum and a transmittance higher over the said second range that over the said first range. The present invention relates in particular to a dichromatic mirror which has a high reflectivity across most or all of the visible spectrum and a high luminous transmittance over a narrow band of the visible spectrum. The invention includes within its scope a method for formation of the dichromatic mirror.

While dichromatic mirrors may simply be employed for decorative purposes, for example in furniture, a major application is in road vehicle mirrors and especially in a vehicle rear-view device which is provided with a display light or detector positioned behind the mirror glass. Vehicle mirrors are necessarily located at positions which give a clear view to the rear of the vehicle, thus providing for any display light within the mirror to be clearly visible to other road users behind the vehicle. In particular the display light can usefully be a warning light, for example for brakes, hazard or turn signals.

In the present description, the term "luminous transmittance" (TALC) defines the percentage of the luminous flux emitted at a given wavelength by the "source C" illuminant standard of the International Commission on Illumination - *Commission Internationale de l'Eclairage* (CIE) that is transmitted through a coated substrate.

The total luminous transmission (TLC) of a coated substrate is the result of integrating the expression :

$$\Sigma \, T_{\lambda}.E_{\lambda}.S_{\lambda}/\Sigma \, E_{\lambda}.S_{\lambda}$$

between the wavelengths 380 and 780 nm, in which $T_{\lambda}$ is the transmittance at wavelength $\lambda$, $E_{\lambda}$ is the spectral distribution of illuminant C and $S_{\lambda}$ is the sensitivity of the normal human eye as a function of the wavelength $\lambda$.

The term "luminous reflectivity" (RLC) defines the percentage of the incident luminous flux emitted by the source C illuminant standard that is reflected by a coated substrate on its coated face.

The term "refractive index" (n) is defined in the CIE international Lighting Vocabulary, 1987, page 138.

The colour of the coated substrates are measured according to the Hunter method, (RS Hunter, The measurement of Appearance, John Wiley & Sons, NY 1975) and expressed in the Hunter coordinates L, a, b.

United States patent 5014167 describes and claims a combination rear view device and brake or directional signalling lamp for a vehicle. The device comprises a semitransparent dichromatic mirror combined with lighting means which operates as the brake lamp or directional signalling lamp. The lighting means is energised when the vehicle operator steps on the brake pedal or uses the directional signalling switch. The combination includes a baffle assembly which permits rearward escape of light from the lighting means but blocks light from travelling along the vehicle operator's line of sight.

European patent specification EP-A-0725286 relates to an optical filter "which is suitable for use in the mirror of a signalling device of the type described for example in the above-discussed US patent 5014167". It describes its optical filter as a long wavelength pass filter (LWP) and claims a filter composite comprising a transparent substrate, an LWP thin film interference filter having a selected response in the visible spectrum, and selective absorbent means for providing low short wavelength transmittance, visual and ultra-violet opacity, and neutral reflectance. The LWP thin film interference filter may be a stack of alternating layers of high refractive index material and low refractive index material, which provides high transmittance in the red portion of the spectrum, and the high refractive index material absorbing radiation of wavelengths shorter than 600 nm. The high refractive index material may be selected from iron oxide, silicon, or certain metal sulphides, selenides, tellurides, or nitrides. The low refractive index material may be selected from certain metal oxides, certain metal fluorides, silicon oxide or silicon nitride.

Such a LWP filter comprises at least three layers, possibly five, and may present certain colour variations in the reflected image according to the angle of view.

We have now discovered that a dichromatic mirror, suitable as a mirror glass in vehicle rear-view devices as well as for other applications, can be achieved with a simplified coating in which only two layers of specific materials are responsible for the dichromatic and required optical properties of the said mirror.

According to a first aspect of the invention there is provided a dichromatic mirror comprising a vitreous substrate and a coating on the substrate, the coating comprising a semiconductor layer of a material having a refractive index above 3.0 adjacent to a dielectric layer of a material having a refractive index comprised between 1.6 and 2.8 and the mirror having a colour in reflection on the coated face of the substrate corresponding in the Lab system to a "b" value above -5.

Such a colour range is suitable for specific applications of a mirror according to the invention in which blue colours are generally not suitable, as generally in automotive rear view mirrors.

Alternatively, according to the invention there is provided a dichromatic mirror comprising a vitreous substrate and a coating on the substrate, the coating comprising a semiconductor layer of a material having a refractive index above 3.0 adjacent to a metal layer.

Such a mirror can be easily manufactured and is usable for applications of a mirror according to the invention in which the coating is protected by a paint layer preventing oxidation of the metal layers, as it can be the case when the coating is deposited on the face of the substrate opposed to the observer.

A mirror coating according to the invention in which only two layers are responsible for the dichromatic and required optical properties of the mirror enables to reduce the manufacturing costs of the said dichromatic mirror, increases the level of reflectivity and reduces or eliminates any variations in the colour of the reflected image according to the angle of view. Reducing the colour variation effect is especially important since it can be disturbing and misleading for an observer, particularly for a vehicle driver, and may be especially noticeable when, as is usually the case with vehicle mirrors, the mirror glass is curved.

The vitreous substrate is typically thin glass sheet with a thickness in the range 1.8 to 3.1 mm, and with luminous transmission of more than 89 %. According to the required duty the glass may be either flat or curved.

The invention also relates to a process for forming a dichromatic mirror coating according to the invention wherein the respective layers of the coating are successively deposited on the substrate.

Suitable materials for the dielectric layer of the coating are aluminum oxide, tantalum oxide, zirconium oxide, tin oxide, zinc oxide, oxides of an alloy of zinc and tin, oxides of an alloy of indium and tin, titanium oxide, niobium oxide, bismuth oxide, aluminum nitride, silicon nitride magnesium oxide, hafnium oxide, cerium oxide and silicon monoxide.

Preferably, tin oxide is used for the dielectric layer of the coating. This material provides the mirror with a better wear-resistance than the other suitable materials.

It is preferred that the refractive index of the dielectric layer of the coating is at least 1.75. Nevertheless, when this refractive index is at least 2.4, since high refractive index materials are more difficult to deposit on the substrate than lower refractive index materials, it is preferred that the thickness of the dielectric layer is below 31 nm.

The preferred geometric thickness of the dielectric layer of the mirror coating depends upon the material of which it is formed and on its position within the coating stack. In general this geometric thickness is from 5 to 30 nm.

The achievement of the required dichromatic properties by the mirror does not demand a specific sequence of the semiconductor and dielectric layers of the coating but the sequence does have a bearing on the perceived tint of the coated substrate, on the wear-resistance of the coating and the ease of manufacture of the coating stack. Therefore, preferably, the semiconductor layer of the coating is in contact with the substrate.

Suitable semiconductor materials are silicon and/or germanium. Silicon is generally preferred, its high refractive index, about 4.0 for pure silicon, being especially helpful in ensuring the required optical properties of the coated substrate. For the highest quality results the silicon should ideally not include a doping agent, since this renders the coating at least partially amorphous rather than crystalline and accordingly reduces the refractive index. Amorphous material tends to produce a coating having a sharp absorption to wavelength relationship. A doping agent may nevertheless be present since it assists in the process of depositing the coating by magnetron sputtering and for many end uses of the mirror a small proportion of up to 15% by weight of a doping agent in the target material does not reduce the refractive index to an unacceptable degree.

Outstanding dichromatic properties and other optical properties are achieved for the dichromatic mirror when the thickness of the semiconductor layer is between 7 and 27 nm, preferably lower than 25 nm.

It is possible that the dichromatic mirror coating according to the invention consists in only two layers. Nevertheless, further layers can be added to these minimum two layers, essentially for aesthetic purposes.

The optical properties of the mirror are generally similar regardless which face of the substrate is coated, although some slight adjustment of individual layer thickness may be necessary to achieve identical optical results when the face of the substrate that is coated is on the observer's side or not. In some instances a difference between the colour in reflection is achieved according to the face of the substrate relatively to the observer that is coated, giving a useful choice of colours for the mirror.

Another important consideration in choosing between a coating on the face of the substrate directed to the observer's side or on the opposed face is the extent of chemical attacks namely due to ambient pollutants and cleaning agents to which the exposed face of the mirror will be submitted. By placing the coating on the non-exposed face of the substrate most risks of degradation due to the said attacks are avoided and more protection can be achieved by applying a paint layer to the finished coating of the mirror. Nevertheless, such a paint layer may cause undesired modifications of the optical properties of the mirror. Therefore, it is generally preferred that its exposed face bears the coating.

In this case, in order to provide the mirror according to the invention with an increased resistance against chemical attacks, the coating of the said mirror further comprises preferably a protective layer of a material having a thickness such that the luminous transmission and reflectivity of the mirror is substantially unchanged.

Preferably, the protective layer is the outer layer of the coating or is covered by at least one further layer that doesn't substantially change the luminous transmission and reflectivity of the underlying layers.

Suitable materials for the protective layer of the coating are oxide of silicon, titanium or of a metal selected in columns VIb, VIIb and VIII of the periodic table of the elements or of an alloy thereof, preferably chromium oxide.

The preferred geometric thickness of the protective layer of the mirror coating depends upon the material of which it is formed and is generally comprised in a range from 2 to 18 nm.

For certain purposes, the dichromatic mirror according to the invention can be submitted to a thermal treatment of tempering or bending without substantial degradation of its optical properties.

For aesthetic reasons, it is preferred that a dichromatic mirror according to the invention offers a colour in reflection on the coated side of the substrate corresponding in the Lab system to "a" values comprised between -9 and 0 and "b" values below 8, that is not tending to redish colours.

Apart from an exterior or interior vehicle rear-view mirror, the mirror can be a domestic mirror, a road sign or an advertising display device.

The dichromatic mirror according to the invention may be used in an optical device in which a light source is positioned on the side of the substrate opposed to an observer. Alternatively or additionally radiation detecting means, such as an infra-red sensor, may similarly be used. In this embodiment, for example in a vehicle interior rear-view device, the mirror can be used as part of a system for detecting the distance between the vehicle and any other vehicle or object behind it.

In an interior mirror the light source may be for the purpose of conveying information to the driver, for example as a compass or clock display. When the mirror is used in an exterior rear-view device, any light source used as a warning light will normally be required to have a dominant wavelength in the red or amber ranges. Light emitting diodes (LED's) are generally suitable for all such light sources. To incorporate such lights sources behind a vehicle mirror glass, it is necessary for the mirror to be sufficiently transparent to the wavelength of the warning light, that is typically 655 nm, while retaining a high reflectivity without unacceptable coloration of the reflected image. Local regulations may require that the reflectivity of the mirror glass is at least 35%. In practice the reflectivity of an exterior mirror is typically from 40% to 70% and of an interior mirror may be as high as 70 to 90%.

Therefore, a dichromatic mirror according to the invention preferably has a luminous transmittance ($T_\lambda$LC) of at least 20 % at a wavelength of 655 nm and a luminous reflectivity (RLC) of at least 35 %, preferably from 40% to 80%.

Preferably, when light sources and/or radiation detecting means as here above described are used in a rear-view device, in combination with a mirror according to the invention, the face of the mirror substrate being on the side of these sources or detecting means is coated with a paint layer or bears a screen, for example a louvre screen, with a small unshielded zone left, through which an observer, in particular the vehicle driver, can see the light source and radiation can reach the detecting means.

There are a variety of ways of effecting the deposition of a mirror coating according to the invention on a glass substrate, the choice of deposition method for the respective layers being dependent on several factors as discussed below. First, the required optical properties for the coating impose various restrictions on the deposition method. For example the preference to avoid amorphous silicon points away from the use of plasma deposition, which tends to give an amorphous product. The preference for the silicon to be undoped points away from conventional magnetron sputtering of the silicon, since an aluminum dopant has traditionally been used to give the silicon an acceptable level of conductivity.

In many instances the preferred deposition method is nevertheless magnetron sputtering, typically employing a rotating magnetron cathode. In the case of silicon deposition the sputtering can be pulsed in order to overcome the difficulties arising from its low conductivity. The sputtering method offers the advantage of depositing the coatings in apparatus having separate coating chambers for the semiconductor material and for the other materials. With appropriate selection of the layer materials the method can be carried out at high speed in a single pass through the respective chambers.

Silicon can be deposited by pulsed magnetron sputtering in the presence of argon or a reducing atmosphere at a pressure of from $10^{-6}$ to $10^{-5}$ torr ($1.33 \times 10^{-4}$ to $1.33 \times 10^{-3}$ Pa).

## Examples

In the following examples a mirror was formed by employing magnetron sputtering to apply a coating to 3 mm thick glass sheet. The glass was first washed and rinsed with demineralised water and placed in the entry chamber of the magnetron sputtering apparatus where a coarse vacuum of the order of $10^{-2}$ mbar (1.0 Pa) was established, after which it was placed in a holding chamber where a high vacuum of about $1 \times 10^{-5}$ torr ($1.33 \times 10^{-3}$ Pa) was achieved with the aid of oil diffusion pumps.

The glass was then passed through deposition chambers to apply the successive layers of the coating, the specific coating being determined by the choice of target materials and the atmospheres in the chambers.

The samples of examples 1, 2 and 3 have been submitted to the so called "Neutral Salt Spray" test following NFX41-002 and DIN 50021 SS standards, "Cycled Salt Spray" test, that is 20 cycles of the sequence 1 hour of "Neutral Salt Spray" test followed by 7 hours at ambient conditions followed by 16 hours under 50°C and 95% relative humidity, and "NaOH" tests, that is 2 hours immersion in a pH 13 NaOH aqueous solution at 80°C.

The order of the layers of the mirror coating as it appears in the following table is considered from the substrate

| ex N° | Si (nm) (4.0)** | SnO2 (nm) (1.9)** | Cr2O3 (nm) (1.9)** | TLC (%) | TL$_\lambda$C* (%) | RLC (%) | L | a | b |
|---|---|---|---|---|---|---|---|---|---|
| 1 | 15.3 | 24.6 | 0.0 | 26.4 | 35.0 | 53.4 | 73.1 | -2.1 | 3.4 |
| 2 | 15.3 | 24.6 | 1.0 | 26.5 | 35.0 | 53.0 | 72.8 | -2.2 | 4.2 |
| 3 | 15.3 | 24.6 | 3.3 | 27.0 | 35.2 | 51.9 | 72.1 | -2.5 | 5.9 |
| 4 | 7.0 | 17.0 | 0.0 | 44.7 | 57.0 | 36.3 | 60.3 | -2.4 | -4.0 |
| 5 | 7.0 | 17.0 | 10.9 | 44.1 | 54.7 | 36.3 | 60.3 | -3.0 | 1.6 |
| 6 | 7.0 | 17.0 | 17.5 | 44.7 | 54.0 | 35.0 | 59.2 | -3.4 | 6.2 |
| 7 | 10.0 | 24.6 | 2.9 | 35.9 | 46.3 | 43.5 | 66.0 | -2.7 | 2.8 |
| 8 | 12.5 | 24.6 | 2.9 | 30.8 | 40.3 | 48.2 | 69.4 | -2.6 | 4.1 |
| 9 | 22.5 | 14.0 | 2.9 | 19.6 | 26.1 | 64.5 | 74.9 | -1.9 | 5.4 |
| 10 | 22.5 | 5.0 | 2.9 | 18.7 | 25.9 | 63.4 | 79.4 | -1.6 | 2.5 |
| 11 | 15.3 | 18.3 | 2.9 | 25.8 | 34.7 | 54.3 | 73.7 | -2.1 | 2.4 |
| 12 | 15.3 | 22.5 | 2.9 | 26.5 | 35.0 | 52.9 | 72.8 | -2.3 | 4.4 |
| 13 | 7.0 | 30.0 | 2.9 | 45.4 | 55.3 | 35.0 | 58.2 | -3.2 | 4.5 |
| ex N° | Si (nm) | SnO2 (nm) | TiO2 (nm) (2.5)** | TLC (%) | TL$_\lambda$C* (%) | RLC (%) | L | a | b |
| 14 | 15.3 | 24.6 | 2.9 | 27.3 | 35.4 | 51.5 | 71.8 | -2.4 | 6.3 |
| ex N° | Si (nm) | SnO2 (nm) | SiO2 (nm) (1.5) | TLC (%) | TL$_\lambda$C* (%) | RLC (%) | L | a | b |
| 15 | 15.3 | 0.0 | 24.6 | 25.9 | 36.0 | 54.4 | 73.7 | -1.9 | -0.8 |
| 16 | 15.3 | 24.6 | 2.9 | 26.5 | 35.1 | 53.0 | 72.8 | -2.2 | 4.0 |
| ex N° | Si (nm) | Si3N4 (nm) | - | TLC (%) | TL$\lambda$C*(%) | RLC (%) | L | a | b |
| 17 | 15.3 | 25.3 | | 26.5 | 34.8 | 53.1 | 72.9 | -2.2 | 4.3 |
| ex N° | Si (nm) | AlN (nm) | - | TLC (%) | TL$_\lambda$C* (%) | RLC (%) | L | a | b |
| 18 | 15.3 | 25.3 | - | 26.5 | | 52.9 | 72.7 | -2.3 | 5.1 |
| ex N° | Si (nm) | Ti (nm) | SnO2 (nm) | TLC (%) | TL$_\lambda$C* (%) | RLC (%) | L | a | b |
| 19 | 15.3 | 2 | 24.6 | 24.9 | 31.6 | 52.1 | 72.2 | -2.6 | 2.6 |
| ex N° | Si (nm) | Ti (nm) | TiO2 (nm) | TLC (%) | TL$\lambda$C* (%) | RLC (%) | L | a | b |
| 20 | 15.3 | 2 | 20 | 24.6 | 31.3 | 52.3 | 72.6 | -3.2 | 5.7 |
| * : | Si (nm) | Cr (nm) | - | TLC (%) | TL$_\lambda$C* (%) | RLC (%) | L | a | b |
| 21 | 15.3 | 2.5 | - | 21.9 | 31.4 | 56.5 | 75.2 | -2.25 | -4 |
| ex N° | Si (nm) | Fe (nm) | - | TLC (%) | TL$_\lambda$C* (%) | RLC (%) | L | a | b |
| 22 | 18.3 | 4.0 | - | 18.3 | 26.0 | 61.7 | 78.5 | -2.1 | -2.6 |
| ex N° | Si (nm) | Al (nm) | - | TLC (%) | TL$_\lambda$C* (%) | RLC (%) | L | a | b |
| 22 | 18.3 | 4.0 | - | 21.3 | 31.6 | 57.8 | 76.0 | -3.5 | -6.5 |

* : λ=655 nm

** : refractive index

| ex N° | "Neutral salt Spray | "Cycled Salt Spray" | "NaOH" |
|---|---|---|---|
| 1 | degradation | degradation | degradation |
| 2 | no degradation | slight degradation | no degradation |
| 3 | no degradation | no degradation | no degradation |

## Claims

1. A dichromatic mirror comprising a vitreous substrate and a coating on the substrate, characterised in that the coating comprises a semiconductor layer of a material having a refractive index above 3.0 adjacent to a dielectric layer of a material having a refractive index comprised between 1.6 and 2.8 and in that the mirror has a colour in reflection on the coated face of the substrate corresponding in the Lab system to a "b" value above -5.

2. A dichromatic mirror as claimed in claim 1 in which the material of the dielectric layer is selected from one or more of aluminum oxide, tantalum oxide, zirconium oxide, tin oxide, zinc oxide, oxide of an alloy of zinc and tin, oxide of an alloy of indium and tin, titanium oxide, niobium oxide, bismuth oxide, aluminum nitride, silicon nitride, magnesium oxide, hafnium oxide, cerium oxide, silicon monoxide.

3. A dichromatic mirror as claimed in any preceding claim, in which the material of the dielectric layer has a refractive index of at least 1.75.

4. A dichromatic mirror as claimed in any preceding claim, in which when the material of the dielectric layer has a refractive index of at least 2.4 the geometric thickness of this layer is below 31 nm.

5. A dichromatic mirror as claimed in any preceding claim, in which the geometric thickness of the dielectric layer is in the range 5 to 30 nm.

6. A dichromatic mirror comprising a vitreous substrate and a coating on the substrate, characterised in that the coating comprises a semiconductor layer of a material having a refractive index above 3.0 adjacent to a metal layer.

7. A dichromatic mirror as claimed in any preceding claim, in which the semiconductor layer is in contact with the substrate.

8. A dichromatic mirror as claimed in any preceding claim, in which the material of the semiconductor layer essentially consists in silicon and/or germanium.

9. A dichromatic mirror as claimed in any preceding claim, in which the thickness of the semiconductor layer is in the range 7 to 27 nm.

10. A dichromatic mirror as claimed in any preceding claim in which the coating consists in two layers.

11. A dichromatic mirror as claimed in anyone of claims 1 to 9, in which the coating comprises a further protective layer having a thickness such that the luminous transmission and reflectivity of the underlying layers is substantially unchanged.

12. A dichromatic mirror as claimed in claim 11, in which the protective layer is the outer layer of the coating or is covered by at least one further layer that does not substantially change the luminous transmission and reflectivity of the underlying layers.

13. A dichromatic mirror as claimed in claim 11 or 12, in which the material of the protective layer is an oxide of silicon, titanium or of a metal selected in columns VIb, VIIb and VIII of the periodic table of the elements or of an alloy thereof.

14. A dichromatic mirror as claimed in anyone of claims 11 to 13, in which the geometric thickness of the protective layer is in the range 2 to 18 nm.

15. A dichromatic mirror as claimed in any preceding claim, in which the mirror has been submitted to a thermal treatment of tempering or bending.

16. A dichromatic mirror as claimed in any preceding claim, in which the colour in reflection on the coated face of the substrate expressed in the Lab system corresponds to "a" values comprised between -9 and 0 and "b" values below 8.

17. A dichromatic mirror as claimed in any preceding claim, having a luminous'transmittance ($T_\lambda$LC) of at least 20 % at a wavelength of 655 nm and a luminous reflectivity (RLC) of at least 35 %.

18. An optical device comprising a dichromatic mirror as claimed in any preceding claim, in which a light source and/ or a radiation detecting means is positioned on the side of the mirror opposed to the observer.

19. An optical device as claimed in claim 18, in which the face of the mirror opposed to the observer carries a paint layer or a louver screen having a small unshielded zone.

20. A method of forming a dichromatic mirror as claimed in claims 1 or 6, wherein the respective layers of the coating are successively deposited on the substrate.

21. A method according to claim 20, wherein the layers of the coating are applied by magnetron sputtering.

22. A method according to claim 21, which comprises a step of thermal tempering or bending of the coated substrate.

**European Patent Office**

## EUROPEAN SEARCH REPORT

Application Number

EP 98 12 4360

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| E | GB 2 326 489 A (GLAVERBEL) 23 December 1998 * page 9, line 2 - line 10 * * page 11, line 21 - line 29 * * claims 3,4,18,19 * & CA 2 232 649 A (GLAVERBEL) 25 September 1998 --- | 1-3,8,9, 11,16-21 | G02B5/28 C03C17/34 C03C17/36 |
| X | GB 2 311 791 A (GLAVERBEL) 8 October 1997 * claim 1 * * page 10, line 10 * * page 10, line 25 - line 27 * * page 14, line 1 - line 15 * --- | 1,2, 8-10,15, 20 | |
| X | EP 0 098 088 A (TEIJIN LTD) 11 January 1984 * page 1, line 4 - line 12 * * page 5, line 4 - line 20 * * page 6, line 4 - line 8 * * page 13, line 4 - last line * --- | 6-8, 11-13 | |
| X | DATABASE WPI Section Ch, Week 8921 Derwent Publications Ltd., London, GB; Class K08, AN 89-154122 XP002103066 & JP 01 094299 A (CANON KK), 12 April 1989 * abstract * --- | 6,8,9 | TECHNICAL FIELDS SEARCHED (Int.Cl.6) G02B C03C B60Q B60R |
| A | WO 97 01775 A (CARDINAL IG CO) 16 January 1997 * page 1, line 7 - line 8 * * page 5, line 15 - line 24 * * page 8, line 8 - line 19 * --- -/-- | 6-8, 10-16, 20-22 | |

The present search report has been drawn up for all claims

| Place of search | Date of completion of the search | Examiner |
|---|---|---|
| BERLIN | 19 May 1999 | Ciarrocca, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 98 12 4360

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | EP 0 725 286 A (OPTICAL COATING LABORATORY INC) 7 August 1996<br>* the whole document * | 1,2, 18-21 | |
| | ----- | | |
| | | | **TECHNICAL FIELDS SEARCHED** (Int.Cl.6) |

The present search report has been drawn up for all claims

| Place of search | Date of completion of the search | Examiner |
|---|---|---|
| BERLIN | 19 May 1999 | Ciarrocca, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 98 12 4360

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-1999

| Patent document cited in search report | | Publication date | Patent family member(s) | | | Publication date |
|---|---|---|---|---|---|---|
| GB 2326489 | A | 23-12-1998 | CA | 2232649 | A | 25-09-1998 |
| GB 2311791 | A | 08-10-1997 | NONE | | | |
| EP 0098088 | A | 11-01-1984 | JP | 1632794 | C | 26-12-1991 |
| | | | JP | 2057498 | B | 05-12-1990 |
| | | | JP | 59026251 | A | 10-02-1984 |
| | | | JP | 1016668 | B | 27-03-1989 |
| | | | JP | 1532562 | C | 24-11-1989 |
| | | | JP | 59109355 | A | 25-06-1984 |
| | | | JP | 1016669 | B | 27-03-1989 |
| | | | JP | 1532563 | C | 24-11-1989 |
| | | | JP | 59111842 | A | 28-06-1984 |
| | | | JP | 1016670 | B | 27-03-1989 |
| | | | JP | 1532564 | C | 24-11-1989 |
| | | | JP | 59111843 | A | 28-06-1984 |
| | | | US | 4639069 | A | 27-01-1987 |
| WO 9701775 | A | 16-01-1997 | CA | 2225234 | A | 16-01-1997 |
| | | | EP | 0835465 | A | 15-04-1998 |
| EP 0725286 | A | 07-08-1996 | JP | 8327818 | A | 13-12-1996 |

EPO FORM P0459

For more details about this annex : see Official Journal of the European Patent Office, No. 12/82